# EUROPEAN PATENT SPECIFICATION

(11) **EP 0 452 280 B1**
(45) Date of publication and mention of the grant of the patent: **21.06.1995**
(21) Application number: 91830135.9
(22) Date of filing: 09.04.1991
(51) Int. Cl.: G05D 1/03

(54) **A method and a system for controlling the path of movement of a vehicle, particularly a car**
Verfahren und Vorrichtung zur Bahnsteuerung eines Fahrzeuges, insbesondere eines Kraftfahrzeuges
Procédé et dispositif de commande de la trajectoire d'un véhicule, en particulier d'une automobile

(30) Priority: 12.04.1990 IT 6727590
(43) Date of publication of application: 16.10.1991
(73) Proprietor: FIAT AUTO S.p.A., 10135 Torino (IT)
(72) Inventor: Collinucci, Luigi, I-73050 Santa Chiara di Nardo (Lecce) (IT)
(74) Representative: Bosotti, Luciano

(56) References cited:
- EP-A- 0 252 219
- EP-A- 0 270 415
- AU-A- 426 936
- GB-A- 2 143 969
- US-A- 3 575 255

## Description

In general, the present invention confronts the problem of controlling the paths of movement of vehicles such as, for example, motor cars.

The invention has been developed with particular concern for its possible use in road safety systems, particularly for motor-vehicle test tracks. Such tracks are used by the main motor-vehicle producers for testing and checking the characteristics of motor vehicles under greatly differing conditions which reproduce, and very often exaggerate, certain critical conditions typical of road traffic situations. Circular or annular tracks are, for example, used on which, the vehicles are subjected to long test cycles along circular paths with large radii of curvature in order to check their operating characteristics in traffic-free environments so that the vehicle components can be checked with great precision and in great safety. During these tests or these circuits, which often assume a very repetitive character and extend over prolonged periods of time, the attention of the test-drivers driving the vehicles may tend to wander with the result that the vehicle tends to deviate and depart from the lane assigned to it (usually indicated by lines of paint applied to the road surface as horizontal markings), risking collision with vehicles travelling in adjacent lanes.

There is thus a need to provide path-control means which can prevent such dangerous situations from arising.

As is well known, the paths of movement of vehicles such as trolleys or the like can be controlled in various applicational environments (for example in industrial plants) by means of detectors which are mounted on the vehicles themselves and which can detect an electromagnetic signal generated by a conductor embedded in, or simply resting on the surface of, the path and supplied by several low-frequency generators which are in turn supplied by electrical systems (so-called AGV systems and the like).

Clearly, although a solution of the type specified above can be adopted without particular difficulties in an industrial establishment, it is not well suited to applications on test tracks due to the obvious need to sink guide conductors along the entire length of each lane of the track.

It is known from EP-A-0 270 415 a system of guiding on the ground an unmanned vehicle, equipped with proximity detectors cooperating with reference marks on the ground; the vehicle is provided with an odometer and the reference marks are metallic tapes.

It is also known from EP-A-0 252 219 a method of guiding an unmanned vehicle with a sensor of metals; ground marks are provided comprising a plurality of line segments made of metal.

In the past (see, for example, United States patent No. 3 575 255) it has been proposed to use magnetic strips extending along the direction of travel of the vehicles (for example along the lanes of a motorway) for controlling the paths of vehicles such as motor cars.

In the solution described in this patent, the road surface is provided with one or more substantially continuous, magnetisable strips extending in the direction of travel. The strips are magnetised with a sequence of magnetic poles which alternate at a certain frequency. The strips are preferably applied in the form of a paint constituted by a mixture of an organic polymeric binder (for example a polyurethane binder) with dispersed magnetisable particles (for example Fe₂O₃).
However, this solution certainly cannot be considered satisfactory, both because of the cost and weight of these paints, the difficulties encountered in protecting them against wear and in their absorption by and adherence to the ground, and because of the need to provide a proper system for magnetising the particles dispersed in the paint.

The object of the present invention is, therefore, to provide means which satisfy the requirements expressed above perfectly, particularly as regards safety on the roads and on vehicle test tracks, without giving rise to the disadvantages of the prior solutions referred to.

According to the present invention, this object is achieved by virtue of a method and a system having the characteristics cited specifically in the claims which follow.

In summary, the present invention is based on the solution of providing a metal detector on the vehicle which can detect the presence of any metals mixed with paints of the type used for forming horizontal road markings. In the simplest case, such a paint may be constituted by a binder with a suspension of aluminium powder. With minimal changes, this is the composition of the paint already normally used for making the so-called metallised paints currently used in the automotive industry. In particular, the adoption of this solution eliminates the need to pre-magnetise the strips formed on the ground whereby the formation of the fixed parts of the system involves simply the application of the normal horizontal markings with the use of paints containing dispersions of metallic powder.

The invention will now be described, purely by way of non-limiting example with reference to the appended drawings, in which:
Figure 1 shows schematically the mounting arrangement of a system according to the invention, and
Figure 2 shows a possible embodiment of a detector circuit which can be used in the system according to the invention.

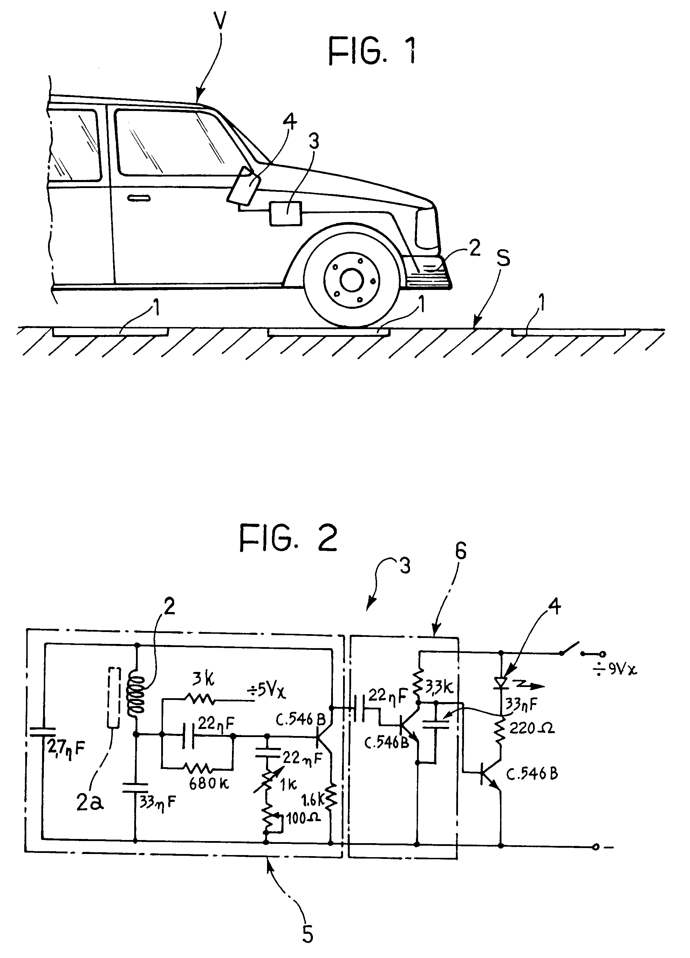

In Figure 1, a vehicle, typically a motor car, whose path is to be controlled, is generally indicated V.

With reference to the example mentioned in the introductory part of the present description, this may be a motor car engaged in a cycle of tests on a track comprising one or more lanes identified by one or more continuous or discontinuous guide lines formed on the road surface S.

The lines in question may, for example, be a series of markings such as rectangular marks 1 (of the type and dimensions used for normal road marking), dots, squares, etc. depending on the specific applicational requirements. Naturally, the markings may also be connected together over certain distances to provide continuous lines, possibly double lines, etc.

The markings 1 are formed with a paint containing a dispersion of metal, preferably aluminium powder.

They therefore result in a variation in the characteristics of magnetic permeability over the road surface S in general.

This variation is detected by a sensor 2 mounted on the vehicle V and connected, by means of a processing circuit 3, to a visual display unit or panel 4 (in the simplest case an LED), possibly associated with an audible and/or visible warning device mounted in the passenger compartment of the motor vehicle V in a position such that it can give a clear and precise signal to the driver driving the vehicle.

The sensor 2 may, for example, be constituted by an aerial which is held at a certain distance (for example of the order of 6 cm) from the road surface S by being mounted under the bumper of the vehicle V. Typically the aerial may be an inductance (by way of reference) with about sixty turns of 0.25mm diameter copper wire having a turn diameter of 1 cm and with an associated ferrite core 2a (for example 5.7 cm long and 0.95 cm in diameter).

The aforesaid characteristics, which are given here to complete the description of a possible embodiment of the invention, should certainly not be interpreted as limiting the scope of the invention. This is true, in particular, as regards the structure of the circuit 3 shown diagrammatically in Figure 2.

Briefly, the circuit 3 is constituted essentially by an LC resonance oscillator the inductive part of which is constituted by an aerial 2 whose output is connected to an envelope detector unit 6 which can pilot the indicator (LED) 4 causing it to be lit when the envelope of the oscillation signal of the oscillator exceeds a predetermined threshold level.

Since the aerial 2 faces the road surface S on which the metallic markings 1 defining the guide lines are situated, the circuit 3 in practice behaves as a resonance oscillator which, by virtue of the presence of the aerial 2, detects any variation in the permeability of the space between the aerial 2 , the air and the road surface S. This permeability is affected by the presence of the lines 1. Consequently (with reference to any use as a safety system for test tracks, as indicated at the beginning), when the vehicle V is travelling correctly within the lane assigned to it, the oscillations of the circuit 3 are such as to keep the indicator 4 de-activated.

When, for example, due to a momentary distraction of the driver, the vehicle V moves near to or even astride the guide lines 1, the consequent variation in permeability (with the consequent variation in the impedance of the aerial 2) induced in the circuit 3 which acts as a metal detector, activates the indicator 4 with the consequent emission of an alarm or warning signal to the driver.

Naturally, in other applications, exactly the opposite operating criterion is possible, the alarm signal being emitted when the vehicle moves to one side or other of a central strip used as a guide strip which the vehicle is to follow.

Naturally further variants are possible.

This is true primarily as regards the circuits used for forming the sensor 2 and its signal-processing unit 3.

In particular, and also out of regard for the completeness of the description, Figure 2 shows the nominal values or symbols of the various components (resistors, capacitors and transistors) usable to form a circuit 3 which can be used in a system according to the invention.

Naturally circuits and oscillator layouts quite different from those described and illustrated can be used to achieve the same functional purposes. In this connection it may be noted that, in practice, the invention can be carried out with the use of any of the circuits of the types currently known as "metal seekers" or "metal detectors": the circuits used in this connection may be of various types, as documented by the wide commercial distribution of devices of this type.

In particular, as regards the warning signal, if the visible indicator 4 has an associated audible indicator (not shown), it is advantageous for the visible signal to have priority over the audible signal so that the user can switch off the audible signal. In particular the audible alarm may be neutralised by the user switching on the direction indicator.

## Claims

1. A method for controlling the path of movement of a manned vehicle (V) on a road surface (S) of a test track, comprising the steps of:
- providing guide markings (1) containing a non magnetized metallic material and defining the path of the vehicle (V) on the road surface (S), and
- providing metal-detector means (2, 3) on the vehicle (V) for detecting the presence of the guide markings (1) on the road surface and generating at least one signal (4) for controlling the path of movement of the vehicle (V), characterised in that:
- the guide markings (1) are formed by the application to the road surface (S) of a paint containing any metallic material dispersed in the paint in powder form.

2. A method according to Claim 1, characterised in that the metallic material is aluminium.

3. A method according to any one of the preceding claims, characterised in that the guide markings (1) are in the form of continuous or discontinuous lines.

4. A method according to any one of the preceding claims characterised by transmitting to the vehicle driver a signal indicative of the fact that the vehicle (V) is moving away from its prescribed path of movement.

5. A method according to Claim 4, characterised in that the indicative signal is provided by a visible indicator (4) and an associated audible indicator, and in that the signal of the visible indicator is given priority over the signal of the audible indicator so that audible indicator can be prevented from operating.

6. A method according to Claim 5, characterised in preventing the operation of the audible indicator by the switching on of the direction indicator.

## Patentansprüche

1. Verfahren zum Steuern des Bewegungswegs eines bemannten Fahrzeugs (V) auf einer Straßenoberfläche (S) einer Teststrecke, umfassend die Schritte:
- Vorsehen von Führungsmarkierungen (1), welche ein nicht magnetisiertes Metallmaterial enthalten und den Weg des Fahrzeugs (V) auf der Straßenoberfläche (S) festlegen, und
- Vorsehen von Metalldetektormitteln (2, 3) an dem Fahrzeug (V) zum Erfassen der Anwesenheit der Führungsmarkierungen (1) auf der Straßenoberfläche und Erzeugen wenigstens eines Signals (4) zum Steuern des Bewegungswegs des Fahrzeugs (V), dadurch gekennzeichnet, daß:
- die Führungsmarkierungen (1) durch das Aufbringen einer Anstrichfarbe auf der Straßenoberfläche (S) gebildet werden, welche ein in der Anstrichfarbe in Pulverform dispergiertes Metallmaterial enthält.

2. Verfahren nach Anspruch 1, dadurch gekennzeichnet, daß das Metallmaterial Aluminium ist.

3. Verfahren nach einem der vorhergehenden Ansprüche, dadurch gekennzeichnet, daß die Führungsmarkierungen (1) die Gestalt kontinuierlicher oder diskontinuierlicher Linien haben.

4. Verfahren nach einem der vorhergehenden Ansprüche, dadurch gekennzeichnet, daß dem Fahrzeugfahrer ein Signal übermittelt wird, welches auf die Tatsache hinweist, daß sich das Fahrzeug (V) von seinem vorgeschriebenen Bewegungsweg wegbewegt.

5. Verfahren nach Anspruch 4, dadurch gekennzeichnet, daß das Hinweissignal von einer Sichtanzeigeeinrichtung (4) und einer zugeordneten Höranzeigeeinrichtung geliefert wird und daß dem Signal der Sichtanzeigeeinrichtung Priorität gegenüber dem Signal der Höranzeigeeinrichtung gegeben wird, wodurch der Betrieb der Höranzeigeeinrichtung verhindert werden kann.

6. Verfahren nach Anspruch 5, dadurch gekennzeichnet, daß der Betrieb der Höranzeigeeinrichtung durch das Einschalten der Richtungsanzeigeeinrichtung verhindert wird.

## Revendications

1. Procédé de commande de la trajectoire d'un véhicule piloté (V) sur une surface de la chaussée (S) d'une piste d'essai, comportant les étapes consistant à:
- prévoir des marques de guidage (1) contenant un matériau métallique non magnétisé et définissant la trajectoire du véhicule (V) sur la surface de la chaussée (S), et
- prévoir sur le véhicule (V) des moyens (2, 3) détecteurs du métal pour détecter la présence des marques de guidage (1) sur la surface de la chaussée et produire au moins un signal (4) pour commander la trajectoire du véhicule (V),
caractérisé par le fait que:
- les marques de guidage (1) sont formées par application, sur la surface de la chaussée (S), d'une peinture contenant tout matériau métallique dispersé dans la peinture sous forme de poudre.

2. Procédé selon la revendication 1, caractérisé par le fait que le matériau métallique est l'aluminium.

3. Procédé selon l'une quelconque des revendications précédentes, caractérisé par le fait que les marques de guidage (1) présentent la forme de lignes continues ou discontinues.

4. Procédé selon l'une quelconque des revendications précédentes, caractérisé par la transmission au pilote du véhicule d'un signal indicatif du fait que le véhicule (V) s'écarte de sa trajectoire prescrite.

5. Procédé selon la revendication 4, caractérisé par le fait que le signal indicatif est fourni par un indicateur optique (4) et un indicateur sonore associé et que le signal de l'indicateur optique a priorité sur le signal de l'indicateur sonore de sorte que l'on peut empêcher l'indicateur sonore de fonctionner.

6. Procédé selon la revendication 5, caractérisé par le fait que l'on empêche le fonctionnement de l'indicateur sonore en utilisant l'indicateur de direction.
